# EUROPÄISCHE PATENTSCHRIFT

(11) **EP 1 869 341 B1**
(45) Veröffentlichungstag und Bekanntmachung des Hinweises auf die Patenterteilung: **11.11.2009**
(21) Anmeldenummer: 06707631.5
(22) Anmeldetag: 22.03.2006
(51) Int. Cl.: F16G 11/10

(54) **VORRICHTUNG ZUM VERSTELLBAREN UND LÖSBAREN VERBINDEN VONZWEI ABSCHNITTEN WENIGSTENS EINES LÄNGLICHEN GEGENSTANDES**
APPARATUS FOR CONNECTING TWO SECTIONS OF AT LEAST ONE ELONGATE OBJECT IN AN ADJUSTABLE AND DETACHABLE MANNER
DISPOSITIF POUR RELIER, DE MANIERE A POUVOIR LES DEPLACER OU LES LIBERER, DEUX PARTIES D'AU MOINS UN ARTICLE LONGITUDINAL

(30) Priorität: 05.04.2005 DE 102005015518
(43) Veröffentlichungstag der Anmeldung: 26.12.2007
(73) Patentinhaber: A. RAYMOND ET CIE, 38000 Grenoble (FR)
(72) Erfinder: HULLMANN, Klaus, 79540 Lörrach (DE); DALER, Helmo, 79539 Lörrach (DE); BLUM ,Klaus, 79540 Lörrach (DE)
(74) Vertreter: Rüttgers, Joachim
(86) Internationale Anmeldenummer: PCT/EP2006/002614
(87) Internationale Veröffentlichungsnummer: WO 2006/105866

(56) Entgegenhaltungen:
- US-A- 2 387 436
- US-A- 2 961 726

## Beschreibung

Die Erfindung betrifft eine Vorrichtung gemäß dem Oberbegriff des Patentanspruches 1.

Eine derartige Vorrichtung ist aus US-A-2,961,726 bekannt. Die vorbekannte Vorrichtung zum verstellbaren und lösbaren Verbinden von zwei Abschnitten wenigstens eines länglichen Gegenstandes in Gestalt einer Wäscheleine verfügt über ein Aufnahmegehäuse und über zwei Blockierteile, die relativ zueinander beweglich in dem Aufnahmegehäuse gelagert und zu einem jeweils einen Abschnitt verklemmenden Eingriff in einer Eingriffsstellung eingerichtet sind. Weiterhin sind Führungskanäle zum definierten Führen der Abschnitte in dem Aufnahmegehäuse vorhanden, wobei sich die Führungskanäle in Richtung eines Freibereiches erstrecken sowie axial miteinander fluchtend ausgerichtet sind und wobei die Blockierteile auf der gleichen Seite der Führungskanäle angeordnet sind. Die Abschnitte treten in dem Freibereich nach einem gegenseitigen Kontakt ihrer Enden aufgrund der Flexibilität der Wäscheleine nach der gegenseitigen Ablenkung aneinander vorbei.

Aus US-A-2,387,436 ist eine Vorrichtung zum verstellbaren und lösbaren Verbinden von zwei Abschnitten wenigstens eines länglichen Gegenstandes bekannt, die über ein Aufnahmegehäuse und zwei Blockierteile verfügt, die relativ zueinander beweglich in dem Aufnahmegehäuse gelagert und zu einem jeweils einen Abschnitt verklemmenden Eingriff in einer Eingriffsstellung eingerichtet sind. Weiterhin sind über die gesamte Länge des Aufnahmegehäuses geschlossene Führungskanäle zum definierten Führen der Abschnitte in dem Aufnahmegehäuse ausgebildet, wobei die Führungskanäle axial miteinander fluchtend ausgerichtet sind und an einem zwischen den Führungskanälen liegenden Anschlagteil enden. Die Blockierteile sind auf der gleichen Seite der Führungskanäle angeordnet, so dass bei Einführen der Abschnitte in das Aufnahmegehäuse die Stirnseiten der Abschnitte an dem Anschlagteil anschlagen.

Aus der DE 698 21 209 T2 ist eine Vorrichtung bekannt, bei der ein Aufnahmegehäuse, zwei Blockierteile und Führungskanäle vorhanden sind. Die Blockierteile sind relativ zueinander beweglich in dem Aufnahmegehäuse gelagert und zu einem jeweils einen Abschnitt verklemmenden Eingriff in einer Eingriffsstellung eingerichtet. Die Führungskanäle dienen zum definierten Führen der Abschnitte in dem Aufnahmegehäuse. Bei dieser Vorrichtung verlaufen die Führungskanäle in Längsrichtung versetzt parallel zueinander in einer Ebene, wobei die Blockierteile einander gegenüberliegend jeweils auf einer Seite eines Abschnittes angeordnet sind, mit dem sie in Eingriff kommen. Dadurch ergibt sich ein verhältnismäßig aufwändiger Aufbau, bei dem es unter anderem erforderlich ist, dass jedes Blockierteil gegebenenfalls mit einem separaten Federelement einer Federanordnung zusammenwirkt, um eine Rückstellkraft auf den jeweiligen Abschnitt auszuüben.

Der Erfindung liegt die Aufgabe zugrunde, eine Vorrichtung der eingangs genannten Art anzugeben, die sich durch einen sehr einfachen und kostengünstigen mechanischen Aufbau auszeichnet und einen betriebssicheren Einsatz auch bei relativ biegesteifen länglichen Gegenständen wie Stahlseile oder Drähte gestattet.

Diese Aufgabe wird bei einer Vorrichtung der eingangs genannten Art erfindungsgemäß mit den kennzeichnenden Merkmalen des Patentanspruches 1 gelöst.

Dadurch, dass bei der erfindungsgemäßen Vorrichtung in dem zwischen den Führungskanälen gelegenen Freibereich eine Umlenkanordnung vorhanden ist, die zu einem koordinierten Ablenken der Abschnitte führt, lassen sich auch verhältnismäßig biegesteife Materialien für die länglichen Gegenstände in Gestalt von beispielsweise Stahlseilen oder Drähten einsetzen, ohne dass es bei einem ansonsten stumpfen Aufeinanderstoßen der Enden der Abschnitte zu einer Blockierung oder einem unerwünschten Aufbiegen mit sich gegebenenfalls anschließender schnellender und damit sicherheitsgefährdender Relaxation der aufgebauten Biegespannung kommt.

Besonders zweckmäßige Weiterbildungen der Erfindung sind Gegenstand der Unteransprüche.

Aus der nachfolgenden Beschreibung von bevorzugten Ausführungsbeispielen der Erfindung unter Bezug auf die Figuren der Zeichnung ergeben sich weitere zweckmäßige Ausgestaltungen und Vorteile. Es zeigen:
- Fig. 1: in einer perspektivischen Ansicht ein erstes Ausführungsbeispiel einer erfindungsgemäßen Vorrichtung,
- Fig. 2: in einer teilgeschnittenen Seitenansicht das erste Ausführungsbeispiel gemäß Fig. 1 mit einer Spiralfeder als einziges Federelement einer Federanordnung,
- Fig. 3: in einer Ansicht das erste Ausführungsbeispiel gemäß Fig. 1 mit Blick in Richtung der Führungskanäle,
- Fig. 4: in einer teilgeschnittenen Seitenansicht ein zweites Ausführungsbeispiel mit einer Blattfeder als einziges Federelement einer Federanordnung,
- Fig. 5: in einer teilgeschnittenen Seitenansicht ein drittes Ausführungsbeispiel mit einer Drahtdrehfeder als einziges Federelement einer Federanordnung und
- Fig. 6: in einer teilgeschnittenen Seitenansicht ein viertes Ausführungsbeispiel mit einem Federring als einziges Federelement einer Federanordnung.

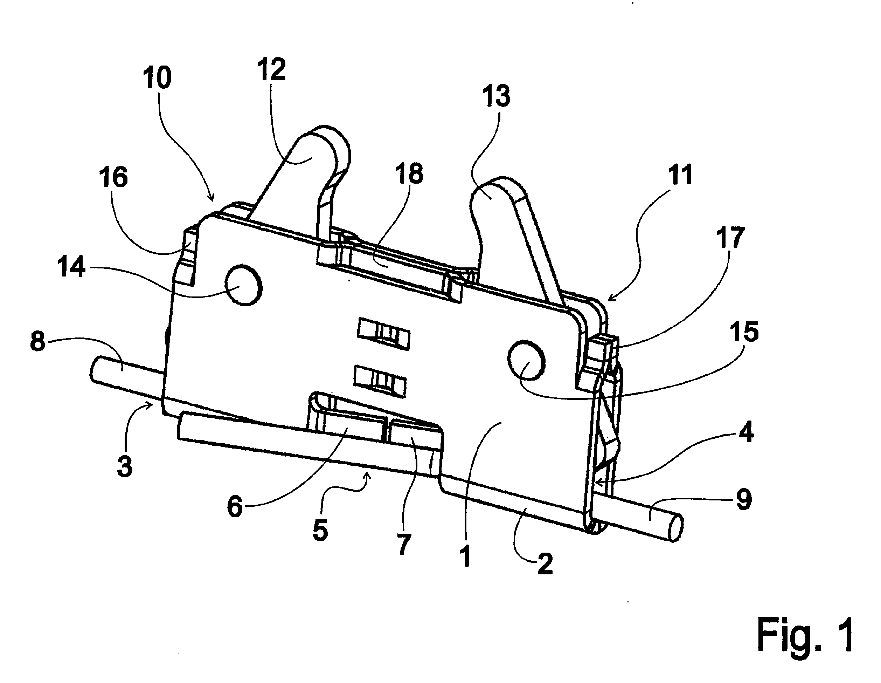

Fig. 1 zeigt in einer perspektivischen Ansicht ein erstes Ausführungsbeispiel einer erfindungsgemäßen Vorrichtung, das über ein Aufnahmegehäuse 1 verfügt, welches aus einem um 180 Grad umgebogenen Blechstück gebildet ist. Entlang der Umbiegung 2 und abschnittsweise durch die Umbiegung 2 begrenzt sind zwei Führungskanäle 3, 4 ausgebildet, die sich von den Randseiten des Aufnahmegehäuses 1 in Richtung eines in der Mitte des Aufnahmegehäuses 1 gelegenen Freibereiches 5 erstrecken und axial miteinander fluchtend ausgerichtet sind. Bei dem Ausführungsbeispiel gemäß Fig. 1 sind in dem Freibereich 5 zwei Laschen 6, 7 einer die direkte Verbindung zwischen den Führungskanälen 3, 4 unterbrechenden Umlenkanordnung vorhanden, die schräg zu der axialen Richtung der Führungskanäle 3, 4 ausgerichtet sind und mit einem Ende an dem Aufnahmegehäuse 1 angeformt sowie mit ihrem anderen freien Ende aufeinander zu weisend angeordnet sind.

In der Darstellung gemäß Fig. 1 ist in jeden Führungskanal 3, 4 ein Abschnitt 8, 9 eines länglichen Gegenstandes, insbesondere eines Stahlseiles oder eines Drahtes, eingeführt, wobei durch die Umlenkwirkung der schräg gestellten Laschen 6, 7 die Abschnitte 8, 9 bei dem Einführvorgang im Freibereich 5 aneinander vorbei gelenkt worden sind und schräg von dem Aufnahmegehäuse 1 weg verlaufen.

Weiterhin ist aus Fig. 1 ersichtlich, dass die erfindungsgemäße Vorrichtung über ein erstes Blockierteil 10 und ein zweites Blockierteil 11 verfügt, die jeweils mit einem auf der den Führungskanäle 3, 4 gegenüberliegenden offenen Seite des Aufnahmegehäuses 1 überstehenden, zum Bewegen der Blockierteile 10, 11 über einen manuellen Eingriff vorgesehene Anlenkhebel 12, 13 ausgebildet sind. Die Blockierteile 10, 11 sind mit jeweils einem in beide Flachseiten des Aufnahmegehäuses 1 eingreifenden Bolzen 14, 15 mit dem Aufnahmegehäuse 1 drehbar verbunden. Um die Bewegungsfreiheit der Blockierteile 10, 11 auf das erforderliche Maß zu begrenzen, sind in den an die Anlenkhebel 12, 13 angrenzenden Bereichen des Aufnahmegehäuses 1 randseitig angeordnete Randverquetschungen 16, 17 und eine zwischen den Anlenkhebeln 12, 13 angeordnete Mittenverquetschung 18 vorhanden, die durch Zusammendrücken von einander gegenüberliegenden Randabschnitten des Aufnahmegehäuses 1 gebildet worden sind.

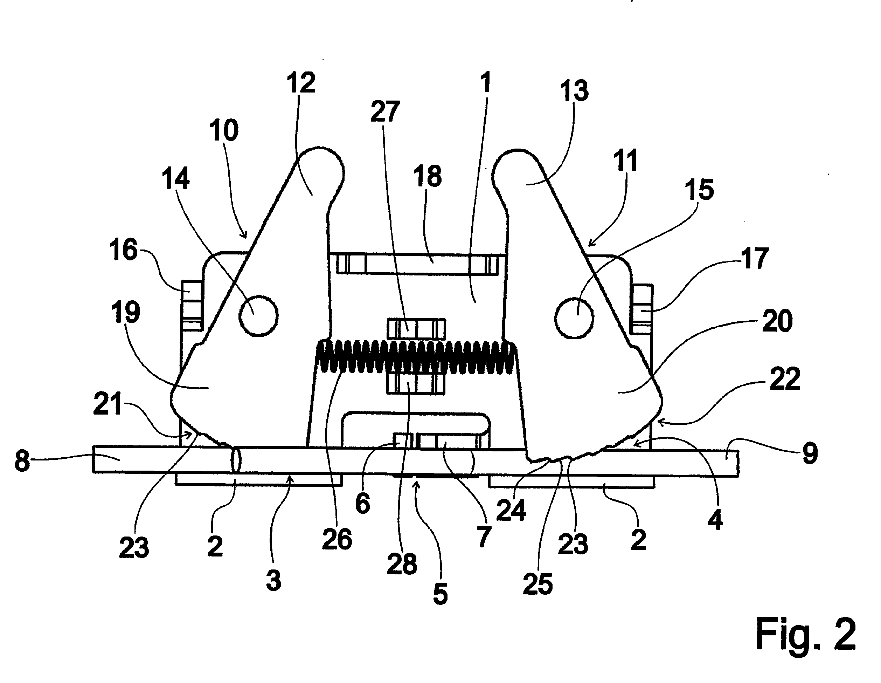

Fig. 2 zeigt in einer teilgeschnittenen Seitenansicht das erste Ausführungsbeispiel gemäß Fig. 1. Aus Fig. 2 ist ersichtlich, dass jedes Blockierteil 10, 11 auf der dem jeweiligen Anlenkhebel 12, 13 gegenüberliegenden Seite des jeweiligen Bolzens 14, 15 mit einem Eingriffsabschnitt 19, 20 ausgebildet ist. Jeder Eingriffsabschnitt 19, 20 weist eine mit dem jeweiligen zu fixierenden Abschnitt 8, 9 in Eingriff kommende, azentrisch gebogene Randseite 21, 22 auf, wobei zum Erzielen einer möglichst guten Hemmwirkung die Krümmung der Biegung in den innenseitig gelegenen Bereichen weniger ausgeprägt als in den außenseitig gelegenen Bereichen ist. Jede Randseite weist für eine gute Hemmwirkung eine durch eine Anzahl von Zähnen 23 gebildete Riffelung auf, wobei jeder Zahn 23 mit einer in Richtung des Freibereiches 5 weisenden steilen Flanke 24 und einer in Richtung der Außenseite weisenden flachen Flanke 25 ausgebildet ist.

Bei dem Ausführungsbeispiel gemäß Fig. 2 ist eine auf Druck wirkende Spiralfeder 26 als einziges Federelement einer Federanordnung vorhanden, die zwischen wenigstens zwei in das Aufnahmegehäuse 1 beispielsweise durch Stanzen eingeformte Federhalter 27, 28 angeordnet und damit gegen Bewegung in dem Aufnahmegehäuse 1 gesichert ist. Die Enden der Spiralfeder 26 liegen jeweils an einem Eingriffsabschnitt 19, 20 eines Blockierteiles 10, 11 an, so dass die Federwirkung der Spiralfeder 26 der Bewegung der Blokkierteile 10, 11 in Richtung des Freibereiches 5 entgegenwirkt.

Das Durchführen der Abschnitte 8, 9 durch die Führungskanäle 3, 4 geht wie nachfolgend erläutert vor sich. Nach Kontakt der freien Enden der Abschnitte 8, 9 mit der jeweiligen Randseite 21, 22 eines Blockierteiles 10, 11 wird durch Hin- und Herschwenken der Blokkierteile 10, 11 jeder Abschnitt 8, 9 durch die Wirkung der Riffelung in jeweils einer Einführrichtung von der Außenseite des Aufnahmegehäuses 1 in Richtung des Freibereiches 5 gefördert. Bei Ausüben einer entgegen der jeweiligen Einführrichtung wirkenden Zugkraft jedoch blockieren die Blockierteile 10, 11 eine Bewegung der Abschnitte 8, 9 aus dem Aufnahmegehäuse 1 heraus, es sei denn, dass durch manuelles Einwirken auf die Anlenkhebel 12, 13 die Blockierteile 10, 11 entgegen der Wirkung der auf Druck wirkenden Spiralfeder 26 durch die azentrische Ausbildung der Randseiten 21, 22 die Abschnitte 8, 9 freigeben und die Abschnitte 8, 9 entgegen der Einführrichtung wieder aus dem Aufnahmegehäuse 1 herausgezogen werden können.

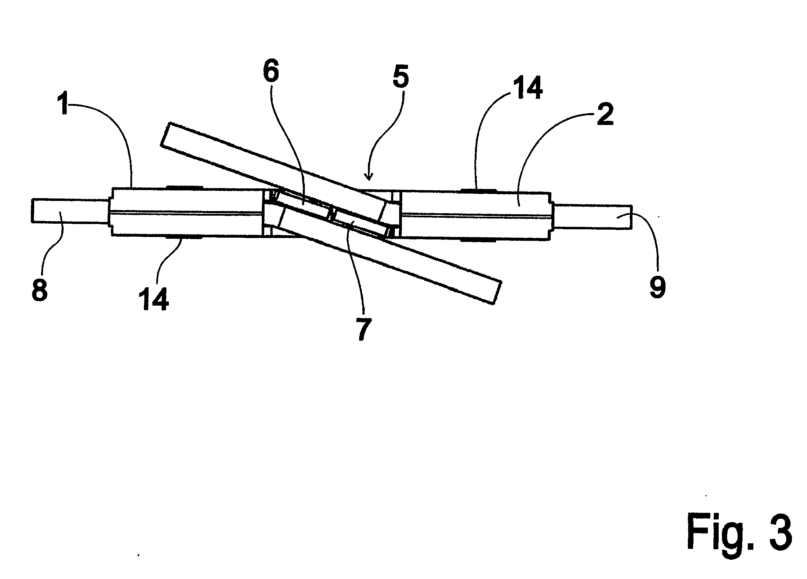

Fig. 3 zeigt in einer Ansicht das erste Ausführungsbeispiel gemäß Fig. 1 mit Blick in Richtung der teilweise durch die Umbiegung 2 begrenzten Führungskanäle 3, 4. Aus Fig. 3 ist besonders gut ersichtlich, dass die Abschnitte 8, 9 nach Einführen in die Führungskanäle 3, 4 von der Außenseite des Aufnahmegehäuses 1 bei Eintritt in den Freibereich 5 durch die zwischen den aufeinander zu weisenden Enden der Führungskanäle 3, 4 angeordneten und miteinander fluchtend im wesentlichen durchgehende Ablenkflächen bildende Laschen 6, 7 aus ihrer axial miteinander fluchtenden Ausrichtung in den Führungskanälen 3, 4 nach außen umgelenkt werden und seitlich über das Aufnahmegehäuse 1 überstehen.

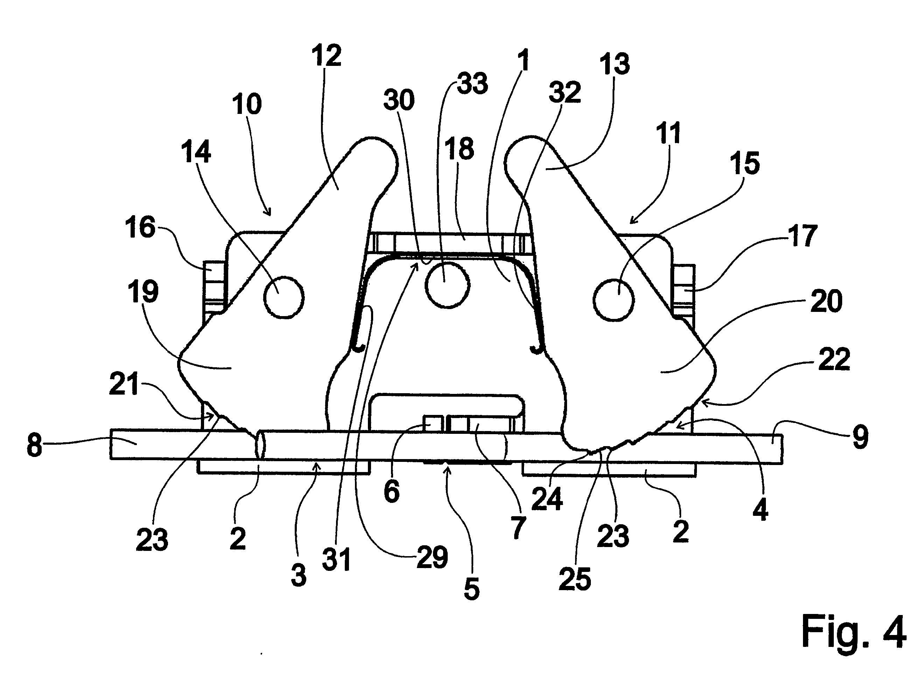

Fig. 4 zeigt in einer teilgeschnittenen Seitenansicht ein zweites Ausführungsbeispiel einer erfindungsgemäßen Vorrichtung, wobei sich bei dem ersten Ausführungsbeispiel gemäß Fig. 1 bis Fig. 3 und dem zweiten Ausführungsbeispiel gemäß Fig. 4 entsprechende Elemente mit den gleichen Bezugszeichen versehen und im weiteren nicht näher erläutert sind. Bei dem zweiten Ausführungsbeispiel gemäß Fig. 4 weist die Federanordnung als einziges Federelement eine Blattfeder 29 auf, die einen Mittenabschnitt 30 aufweist, der an der in Richtung des Freibereiches 5 weisenden Seite der Mittenverquetschung 18 anliegt, sowie über zwei Randabschnitte 31, 32 verfügt, die jeweils an einer nach innen weisenden Randseite eines Blockierteiles 10, 11 anliegen und die Eingriffsabschnitte 19, 20 entsprechend der Wirkung der Spiralfeder 26 bei dem ersten Ausführungsbeispiel nach außen drücken. Zur Sicherung der Blattfeder 29 ist auf der der Randverquetschung 18 gegenüberliegenden Seite des Mittenabschnittes 30 ein innenseitig des Aufnahmegehäuses 1 liegender Fixierdorn 33 ausgebildet.

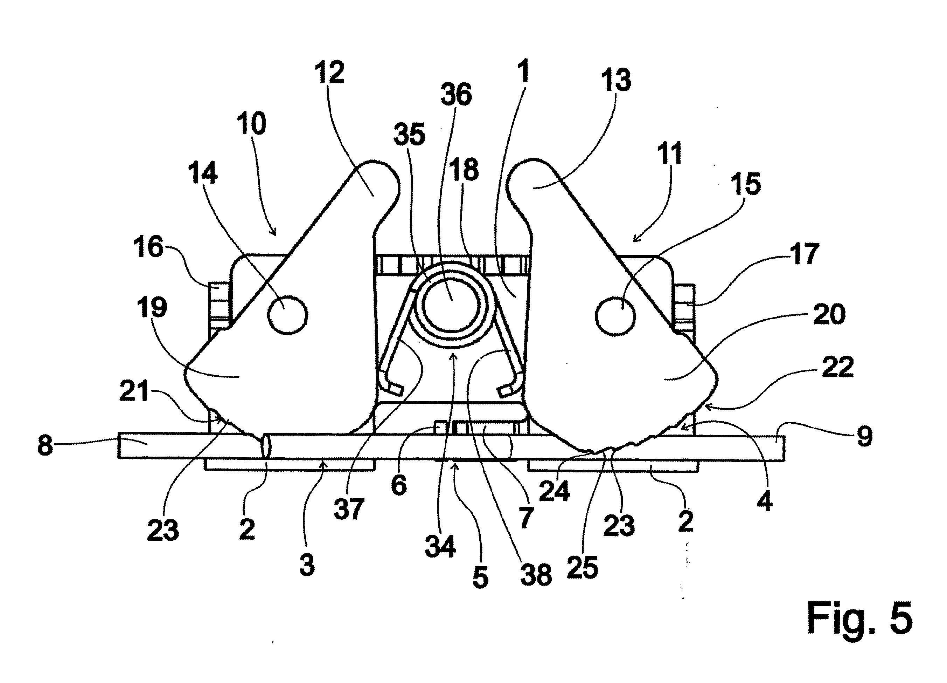

Fig. 5 zeigt in einer teilgeschnittenen Seitenansicht ein drittes Ausführungsbeispiel einer erfindungsgemäßen Vorrichtung, wobei sich bei dem ersten Ausführungsbeispiel gemäß Fig. 1 bis Fig. 3, dem zweiten Ausführungsbeispiel gemäß Fig. 4 und dem dritten Ausführungsbeispiel gemäß Fig. 5 entsprechende Elemente mit den gleichen Bezugszeichen versehen und im weiteren nicht näher erläutert sind. Bei dem dritten Ausführungsbeispiel gemäß Fig. 5 weist die Federanordnung als einziges Federelement eine auf Druck wirkende Drahtdrehfeder 34 auf, deren Mittelteil 35 mit einigen Wicklungen um einen zwischen der Mittenverquetschung 18 und dem Freibereich 5 angeordneten Wickeldorn 36 gelegt ist und deren Randabschnitte 37, 38 an den aneinander zu weisenden Randseiten der Eingriffsabschnitte 19, 20 der Blockierteile 10, 11 angreifen.

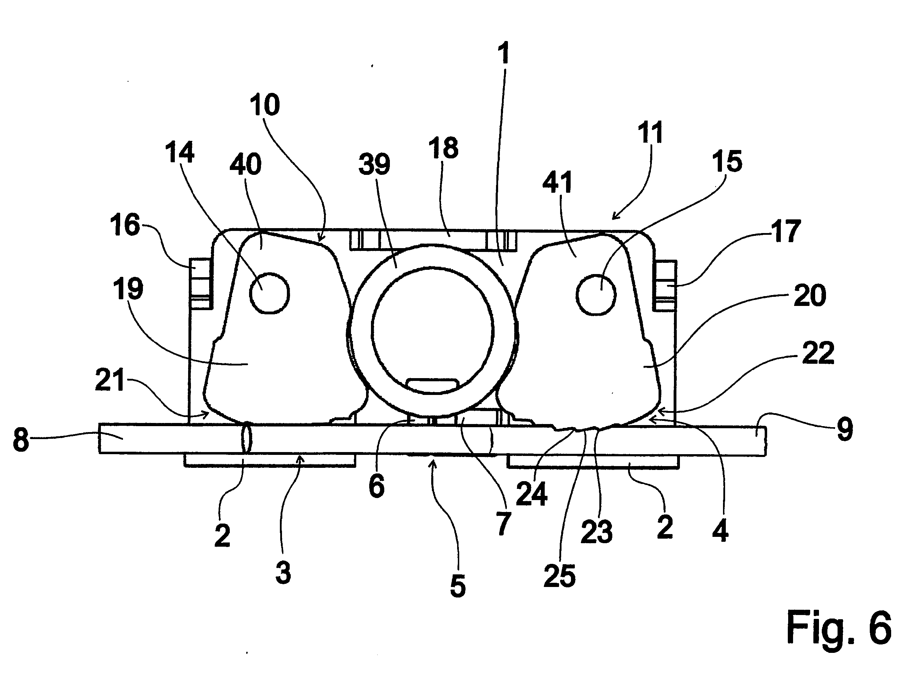

Fig. 6 zeigt in einer teilgeschnittenen Seitenansicht ein viertes Ausführungsbeispiel einer erfindungsgemäßen Vorrichtung, wobei sich bei dem ersten Ausführungsbeispiel gemäß Fig. 1 bis Fig. 3, dem zweiten Ausführungsbeispiel gemäß Fig. 4, dem dritten Ausführungsbeispiel gemäß Fig. 5 und dem vierten Ausführungsbeispiel gemäß Fig. 6 entsprechende Elemente mit den gleichen Bezugszeichen versehen und im weiteren nicht näher erläutert sind. Bei dem vierten Ausführungsbeispiel gemäß Fig. 6 weist die Federanordnung als einziges Federelement einen ringförmig geschlossenen Federring 39 aus einem elastischen Material wie beispielsweise Gummi auf, der zwischen der Mittenverquetschung 18 und dem Freibereich 5 angeordnet ist, wobei der Federring 39 durch die Laschen 6, 7 gegen Herausfallen aus dem Aufnahmegehäuse 1 gesichert ist. Der Federring 39 liegt an den bei diesem Ausführungsbeispiel vorzugsweise rundlich ausgeformten, nach innen weisenden Randseiten der Eingriffsabschnitte 19, 20 der Blockierteile 10, 11 an und übt somit bei Bewegen der Blockierteile 10, 11 nach innen auf diese eine Druckkraft aus.

Bei dem vierten Ausführungsbeispiel ist, wie aus Fig. 6 ersichtlich, jedes Blockierteil 10, 11 vollständig innerhalb des Aufnahmegehäuses 1 angeordnet und verfügt zum Vermeiden eines unbeabsichtigten Einwirkens anstatt der überstehenden Anlenkhebel 12, 13 entsprechend den vorangehend erläuterten Ausführungsbeispielen über Betätigungsabschnitte 40, 41, an denen zum Ausführen einer Schwenkbewegung gezielt jeweils ein Werkzeug ansetzbar ist.

## Patentansprüche

1. Vorrichtung zum verstellbaren und lösbaren Verbinden von zwei Abschnitten (8, 9) wenigstens eines länglichen Gegenstandes mit einem Aufnahmegehäuse (1), mit zwei Blockierteilen (10, 11), die relativ zueinander beweglich in dem Aufnahmegehäuse (1) gelagert und zu einem jeweils einen Abschnitt verklemmenden Eingriff in einer Eingriffsstellung eingerichtet sind, und mit Führungskanälen (3, 4) zum definierten Führen der Abschnitte (8, 9) in dem Aufnahmegehäuse (1), wobei sich die Führungskanäle (3, 4) in Richtung eines Freibereiches (5) erstrecken sowie axial miteinander fluchtend ausgerichtet sind und wobei die Blockierteile (10, 11) auf der gleichen Seite der Führungskanäle (3, 4) angeordnet sind, **dadurch gekennzeichnet, dass** in dem Freibereich (5) eine Umlenkanordnung (6, 7) ausgebildet ist, die zwischen den aufeinander zu weisenden Enden der Führungskanäle (3, 4) angeordnet ist und die direkte Verbindung zwischen den Führungskanälen (3, 4) unterbricht, so dass die Abschnitte (8, 9) in dem Freibereich (5) aneinander vorbei gelenkt werden und schräg von dem Aufnahmegehäuse (1) weg verlaufen.

2. Vorrichtung nach Anspruch 1, **dadurch gekennzeichnet, dass** die Umlenkanordnung wenigstens eine in Bezug auf die axiale Richtung der Führungskanäle (3, 4) schräg ausgerichtete Lasche (6, 7) aufweist.

3. Vorrichtung nach Anspruch 1 oder Anspruch 2, **dadurch gekennzeichnet, dass** eine mit den Blockierteilen (10, 11) zusammenwirkende Federanordnung (26, 29, 34, 39) vorhanden ist, deren Federwirkung der Bewegung der Blockierteile (10, 11) bei Einführen der Abschnitte (8, 9) in das Aufnahmegehäuse (1) entgegenwirkt.

4. Vorrichtung nach Anspruch 3, **dadurch gekennzeichnet, dass** die Federanordnung ein einziges Federelement (26, 29, 34, 39) aufweist, das auf Druck wirkt und zwischen den Blockierteilen (10, 11) angeordnet ist.

5. Vorrichtung nach Anspruch 4, **dadurch gekennzeichnet, dass** das Federelement eine Spiralfeder (26) ist, deren Enden mit den Blockierteilen (10, 11) verbunden sind.

6. Vorrichtung nach Anspruch 4, **dadurch gekennzeichnet, dass** das Federelement eine Blattfeder (29) ist, die mit einem Mittenabschnitt (30) und zwei mit jeweils einem Blockierteil (10, 11) in Eingriff stehenden Randabschnitten (31, 32) ausgebildet ist.

7. Vorrichtung nach Anspruch 4, **dadurch gekennzeichnet, dass** das Federelement eine Drahtdrehfeder (34) ist, die mit wenigstens eine Wicklung aufweisenden Mittelteil (35) und zwei jeweils mit einem Blockierteil (10, 11) in Eingriff stehenden Randabschnitten (37, 38) ausgebildet ist.

8. Vorrichtung nach Anspruch 4, **dadurch gekennzeichnet, dass** das Federelement ein ringförmig geschlossener Federring (39) aus einem elastischen Material ist, der abschnittsweise an den Blockierteilen (10, 11) anliegt.

9. Vorrichtung nach einem der Ansprüche 1 bis 8, **dadurch gekennzeichnet, dass** wenigstens ein Blockierteil (10, 11) mit einem Anlenkhebel (12, 13) ausgebildet ist, der über das Aufnahmegehäuse (1) vorsteht.

10. Vorrichtung nach einem der Ansprüche 1 bis 9, **dadurch gekennzeichnet, dass** das Aufnahmegehäuse (1) aus einem um 180 Grad umgebogenen Blechstück gebildet ist, wobei die Führungskanäle (3, 4) auf ihrer von den Blockierteilen (10, 11) wegweisenden Seite von dem die Umbiegung (2) aufweisenden Abschnitt des Aufnahmegehäuses (1) begrenzt sind.

## Claims

1. Apparatus for connecting two sections (8, 9) of at least one elongated object in an adjustable and detachable manner, comprising a receiving housing (1), comprising two blocking parts (10, 11) which are mounted in the receiving housing (1) so as to be moveable relative to one another and are set up for engaging in each case one section by clamping in an engagement position, and comprising guide channels (3, 4) for defined guidance of the sections (8, 9) in the receiving housing (1), the guide channels (3, 4) extending in the direction of an open area (5) and being axially aligned with one another, and the blocking parts (10, 11) being arranged on the same side of the guide channels (3, 4), **characterized in that** a deflecting arrangement (6, 7) is formed in the open area (5), which deflecting arrangement is arranged between those ends of the guide channels (3, 4) which point towards one another and interrupts the direct connection between the guide channels (3, 4) so that the sections (8, 9) are guided past one another in the open area (5) and run obliquely away from the receiving housing (1).

2. Apparatus according to Claim 1, **characterized in that** the deflecting arrangement has at least one plate oriented obliquely relative to the axial direction of the guide channels (3, 4).

3. Apparatus according to Claim 1 or Claim 2, **characterized in that** a spring arrangement (26, 29, 34, 39) cooperating with the locking parts (10, 11) is present, the spring effect of which counteracts the movement of the blocking parts (10, 11) on insertion of the sections (8, 9) into the receiving housing (1).

4. Apparatus according to Claim 3, **characterized in that** the spring arrangement has a single spring element (26, 29, 34, 39) which operates under pressure and is arranged between the blocking parts (10, 11).

5. Apparatus according to Claim 4, **characterized in that** the spring element is a coil spring (26), the ends of which are connected to the blocking parts (10, 11).

6. Apparatus according to Claim 4, **characterized in that** the spring element is a leaf spring (29) which is formed with a middle section (30) and two edge sections (31, 32) each engaging a blocking part (10, 11).

7. Apparatus according to Claim 4, **characterized in that** the spring element is a wire torsion spring (34) which is formed with a middle part (35) having at least one winding and two edge sections (37, 38) each engaging a blocking part (10, 11).

8. Apparatus according to Claim 4, **characterized in that** the spring element is a closed annular spring ring (39) which comprises a resilient material and rests in sections against the blocking parts (10, 11).

9. Apparatus according to any of Claims 1 to 8, **characterized in that** at least one blocking part (10, 11) is formed with a pivot lever (12, 13) which projects beyond the receiving housing (1).

10. Apparatus according to any of Claims 1 to 9, **characterized in that** the receiving housing (1) is formed from a sheet metal piece bent around through 180 degrees, the guide channels (3, 4) being bounded on their side facing away from the blocking parts (10, 11) by that section of the receiving housing (1) which has the bend (2).

## Revendications

1. Dispositif pour le raccordement, avec possibilité de réglage et de désolidarisation ultérieure, de deux portions (8, 9) d'au moins un objet de forme allongée, comprenant un boîtier formant logement (1), comprenant deux éléments de blocage (10, 11) qui sont disposés, avec la possibilité d'être déplacés l'un par rapport à l'autre, dans le boîtier formant logement (1) et qui sont agencés pour exercer, dans une position de mise en prise d'engagement, une action de blocage en position respectivement sur une portion et comprenant des canaux de guidage (3, 4) destinés à guider de manière déterminée les portions (8, 9) dans le boîtier formant logement (1), dispositif dans lequel les canaux de guidage (3, 4) s'étendent dans la direction d'une zone libre (5) et sont également alignés l'un avec l'autre dans le plan axial et dans lequel les éléments de blocage (10, 11) sont disposés sur le même côté des canaux de guidage (3, 4), **caractérisé en ce qu'**il est prévu, dans la zone libre (5), un dispositif de changement d'orientation (6, 7) qui est disposé entre les extrémités se faisant respectivement face des canaux de guidage (3, 4) et qui interrompt la liaison de raccordement directe entre les canaux de guidage (3, 4), ce qui fait que les portions (8, 9) sont déplacées pour passer l'une devant l'autre et s'écartent du boîtier formant logement (1) en prenant en l'occurrence une position oblique.

2. Dispositif selon la revendication 1, **caractérisé en ce que** le dispositif de changement d'orientation comporte au moins une languette (6, 7) orientée selon une disposition oblique par rapport à la direction axiale des canaux de guidage (3, 4).

3. Dispositif selon la revendication 1 ou la revendication 2, **caractérisé en ce qu'**il comporte un système de ressort (26, 29, 34, 39) qui opère en combinaison avec les éléments de blocage (10, 11), la force élastique que celui-ci exerce empêchant les éléments de blocage (10, 11) de bouger lors de l'introduction des portions (8, 9) dans le boîtier formant logement (1).

4. Dispositif selon la revendication 3, **caractérisé en ce que** le système de ressort se compose d'un seul élément formant ressort (26, 29, 34, 39) qui travaille en compression et qui est disposé entre les éléments de blocage (10, 11).

5. Dispositif selon la revendication 4, **caractérisé en ce que** l'élément formant ressort est un ressort hélicoïdal (26) dont les extrémités sont reliées aux éléments de blocage (10, 11).

6. Dispositif selon la revendication 4, **caractérisé en ce que** l'élément formant ressort est un ressort à lame (29) qui se compose d'une portion médiane (30) et de deux portions latérales (31, 32) qui sont chacune respectivement en prise d'engagement avec un élément de blocage (10, 11).

7. Dispositif selon la revendication 4, **caractérisé en ce que** l'élément formant ressort est un ressort à boudin de torsion (34) qui se compose d'une portion médiane (35) comportant au moins une spire et de deux portions latérales (37, 38) qui sont chacune respectivement en prise d'engagement avec un élément de blocage (10, 11).

8. Dispositif selon la revendication 4, **caractérisé en ce que** l'élément formant ressort est une rondelle élastique fermée de forme annulaire qui est réalisée dans un matériau élastique et qui est au niveau de certaines portions en contact d'application contre les éléments de blocage (10, 11).

9. Dispositif selon l'une des revendications 1 à 8, **caractérisé en ce qu'**au moins un élément de blocage (10, 11) est muni d'un levier de pivotement articulé (12, 13), qui fait saillie au-dessus du boîtier formant logement (1)

10. Dispositif selon l'une des revendications 1 à 9, **caractérisé en ce que** le boîtier formant logement (1) est réalisé dans un flan en tôle replié à 180 degrés, les canaux de guidage (3, 4) étant en l'occurrence limités, au niveau de leur côté orienté vers l'extérieur par rapport aux éléments de blocage (10, 11), par la portion du boîtier formant logement (1) correspondant à sa partie cintrée (2).
